# EUROPEAN PATENT SPECIFICATION

(11) **EP 2 562 020 B1**
(45) Date of publication and mention of the grant of the patent: **26.10.2016**
(21) Application number: 11824993.7
(22) Date of filing: 01.09.2011
(51) Int. Cl.: B60K 1/04, B62D 25/08

(54) **BATTERY PACK VEHICLE INSTALLATION STRUCTURE**
FAHRZEUGINSTALLATIONSSTRUKTUR FÜR EIN BATTERIEPACK
STRUCTURE D'INSTALLATION D'UN BLOC-BATTERIE SUR VÉHICULE

(30) Priority: 17.09.2010 JP 2010209722
(43) Date of publication of application: 27.02.2013
(73) Proprietor: Toyota Shatai Kabushiki Kaisha, Kariya-shi Aichi 448-0002 (JP)
(72) Inventor: IWAI Takahiro, Kariya-shi Aichi 448-0002 (JP); YODA Takehito, Toyota-shi Aichi 471-8571 (JP)
(74) Representative: Dempster, Benjamin John Naftel
(86) International application number: PCT/JP2011/069904
(87) International publication number: WO 2012/035987

(56) References cited:
- AT-U1- 9 328
- JP-A- 2005 168 158
- JP-A- 2007 008 443
- JP-A- 2007 118 796
- JP-A- 2007 118 796
- JP-A- 2007 203 912
- JP-A- 2009 274 666
- JP-A- 2009 274 666

## Description

### TECHNICAL FIELD

The present invention relates to a vehicle-loading structure of a battery pack. More particularly, the present invention relates to a vehicle-loading structure of a battery pack in which a battery pack is loaded on a vehicle by connecting the battery pack to a vehicle body frame that is longitudinally disposed along a vehicle body side portion of the vehicle.

### BACKGROUND ART

In recent years, an electric vehicle using an electric motor as a drive source and a hybrid electric vehicle using a combination of an electric motor and some other drive sources have been put into practical use. In such a vehicle, electrical accumulators for supplying electricity to the electric motor are loaded thereon. Examples of the electrical accumulators are secondary batteries or capacitors such as a nickel-cadmium battery, a nickel-hydrogen battery and a lithium ion battery that can be repeatedly recharged and discharged. The electrical accumulators are loaded on a vehicle body as a battery pack in which they are accommodated in a case.

Examples of a vehicle-loading structure of a battery pack are taught by Patent Document 1 and Patent Document 2.

Patent Document 1 teaches a vehicle-loading structure of a battery pack in which a rear seat back positioned in a rear portion of a vehicle is directed obliquely backwards and in which a battery pack is positioned so as to be inclined obliquely backwards while it is positioned in close proximity to a back surface of the rear seat back and is secured by means of a frame-shaped member. Formed in a lower end portion of the frame-shaped member are leg portions that are connected to vehicle body frames. In the vehicle-loading structure of a battery pack of Patent Document 1, connections between the frame-shaped member and the vehicle body frames are connections that are created via the right and left leg portions formed in the lower end portion of the frame-shaped member. Therefore, when a shock is applied to the vehicle, a load caused by the shock can be concentrated to the leg portions of the frame-shaped member, so that the connection can be easily released.

Patent Document 2 teaches a vehicle-loading structure of a battery pack in which a battery pack has a battery module, a battery cover covering the battery module, and a battery support frame supporting the battery module and horizontally extending through the battery cover and in which right and left end portions of the battery support frame are connected to right and left side frames that extend longitudinally along a vehicle body. In the vehicle-loading structure of a battery pack according to Patent Document 2, the right and left end portions of the battery support frame are directly placed on and connected to the right and left side frames that extend longitudinally along the vehicle body. Thus, positions of connecting points of the battery support frame may be restricted by a shape of the side frames.

### PRIOR ART DOCUMENTS

### PATENT DOCUMENT

Patent Document 1: Japanese Laid-Open Patent Publication No. 2005-112284
Patent Document 2: Japanese Laid-Open Patent Publication No. 2006-335243

AT 9328U1 discloses a battery pack arrangement from which may be derived the precharacterizing portion of claim 1 appended hereto.

### SUMMARY OF THE INVENTION

### PROBLEMS TO BE SOLVED BY THE INVENTION

In the techniques taught by Patent Document 1 and Patent Document 2, when a shock is applied to the vehicle, the battery pack can be disconnected from the vehicle body frames, so that the battery pack can move forwardly of the vehicle. As a countermeasure against this, it is considered that if the connecting points of the battery pack and the vehicle body frames can be increased in number, the battery pack can be prevented from being disconnected from the vehicle body frames because loads applied to the connecting portions can be dispersed. However, in view of structural restrictions of the vehicle, connecting costs, materials costs or other such factors, it may be difficult to increase the number of the connecting points.

Thus, in a vehicle-loading structure of a battery pack in which a battery pack is loaded on a vehicle by connecting the battery pack to a vehicle body frame that is longitudinally disposed along a vehicle body side portion of the vehicle, there is a need to provide the vehicle-loading structure of a battery pack in which the battery pack can be restricted from moving forwardly of the vehicle without increasing the number of the connecting portions of the battery pack and the vehicle body frame when a support member is disconnected from the vehicle body frame due to a shock applied to the vehicle.

### MEANS FOR SOLVING THE PROBLEMS

In order to solve the problems described above, a vehicle-loading structure of a battery pack according to the present teaching employs the following measures.

A first aspect of the present teaching provides a vehicle-loading structure of a battery pack in which a battery pack is loaded on a vehicle by connecting the battery pack to a vehicle body frame that is longitudinally disposed along a vehicle body side portion of the vehicle. The battery pack is fastened and connected to the vehicle body frame via a support member that is capable of securing and supporting the battery pack. The support member has an interference portion that is configured to interfere with a vehicle structural body when the battery pack moves in a vehicle forward direction caused by the disconnection of the support member from the vehicle body frame due to a shock applied to the vehicle. The interference portion of the support member interferes with the vehicle structural body, so that the battery pack can be supported by the vehicle structural body. The battery pack is disposed between wheel houses for vehicle rear wheels of the vehicle. Further, the vehicle structural body is a reinforcing structural body reinforcing the wheel houses. The interference portion of the support member is formed so as to protrude and extend toward the vehicle structural body, while protruding in a vehicle width direction, and is configured to be positioned under the battery pack.

According to the structure described above, the support member interleaved between the battery pack and the vehicle body frame has the interference portion.

Thus, it is possible to increase the number of ways in which a shock load applied to the battery pack due to the shock applied to the vehicle is received by the vehicle structural body. That is, the shock load can be received by the vehicle structural body via the connecting points between the support member and the vehicle body frame. In addition such a shock load can be received by the vehicle structural body due to the interference of the interference portion of the support member and the vehicle structural body. This means that the number of ways in which the shock load is received by the vehicle structural body can be increased. Thus, the battery pack can be restricting from moving in the vehicle forward direction without increasing the number of the connecting points of the battery pack and the vehicle body frame when the support member is disconnected from a the vehicle body frame due to the shock applied to the vehicle.

Further, connecting positions of the support member that is interleaved between the battery pack and the vehicle body frame can be selected by considering a shape of the battery pack and a shape of the vehicle structural body.

Further, in a structure in which the battery pack is directly connected to the vehicle body frame, design changes of the battery pack and the vehicle structural body would involve large-scale changes in shape. However, in the above-described structure, the support member is disposed between the battery pack and the vehicle body frame. Therefore, if the battery pack or the vehicle structural body is changed in shape, it is possible to meet such changes by simply changing a shape of the support member. That is, any changes of the battery pack or the vehicle structural body in shape can be absorbed by the support member. Thus, the large-scale changes in shape can be avoided.

In a second aspect of the present teaching, the interference portion of the support member is formed so as to protrude and extend toward the vehicle structural body.

The interference portion can be formed by changing the support member in shape. Therefore, the interference portion can be formed in the support member without adding any new components. As a result, material costs can be prevented from being increased. Further, since the interference portion is formed by changing the support member in shape, an increase in weight can be minimized. Further, an interfering amount of the interference portion and the vehicle structural body can be adjusted by adjusting a protruding and extending amount of the interference portion. For example, when the protruding amount of the interference portion is increased in order to increase the interfering amount of the interference portion and the vehicle structural body, the shock load applied to the vehicle structural body from the interference portion of the support member can be increased. Thus, a force that restricts the battery pack from moving in the vehicle forward direction can be controlled.

According to the structure described above, the vehicle structural body is the reinforcing structural body reinforcing the wheel houses. Thus, an existing vehicle structural body can be effectively used.

### EFFECTS OF THE INVENTION

In the construction described above, in a vehicle-loading structure of a battery pack in which a battery pack is loaded on a vehicle by connecting the battery pack to a vehicle body frame that is longitudinally disposed along a vehicle body side portion of the vehicle, the battery pack can be restricted from moving forwardly of the vehicle without increasing the number of the connecting points of the battery pack and the vehicle body frame when a support member is disconnected from the vehicle body frame due to a shock applied to the vehicle.

### BRIEF DESCRIPTION OF THE DRAWEINGS

FIG 1 is a view schematically illustrating a construction of a vehicle having a battery pack in order to show a vehicle-loading structure of a battery pack according to Embodiment 1.
FIG 2 is an enlarged view of a rear portion of the vehicle shown in FIG 1.
FIG 3 is an exploded perspective view of the vehicle-loading structure of a battery pack according to Embodiment 1.
FIG 4 is a perspective view of a support member of the vehicle-loading structure of a battery pack according to Embodiment 1.
FIG 5 is a plan view illustrating a positional relation between an interference portion of the support member of the vehicle-loading structure of a battery pack according to Embodiment 1 and a vehicle structural body.
FIG 6 is a perspective view illustrating a condition in which the support member of the vehicle-loading structure of a battery pack according to Embodiment 1 contacts the vehicle structural body.

### MODE FOR CARRYING OUT THE INVENTION

In the following, a mode for carrying out the present teaching will be described with reference to the drawings.

### EMBODIMENT 1

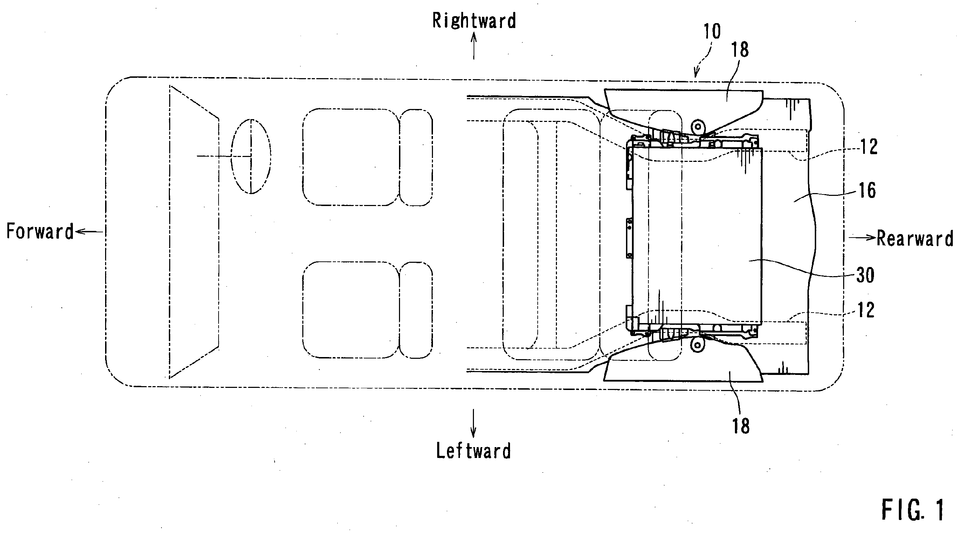

First, a construction of a vehicle-loading structure of a battery pack according to Embodiment 1 will be described with reference to FIGS. 1 to 6.

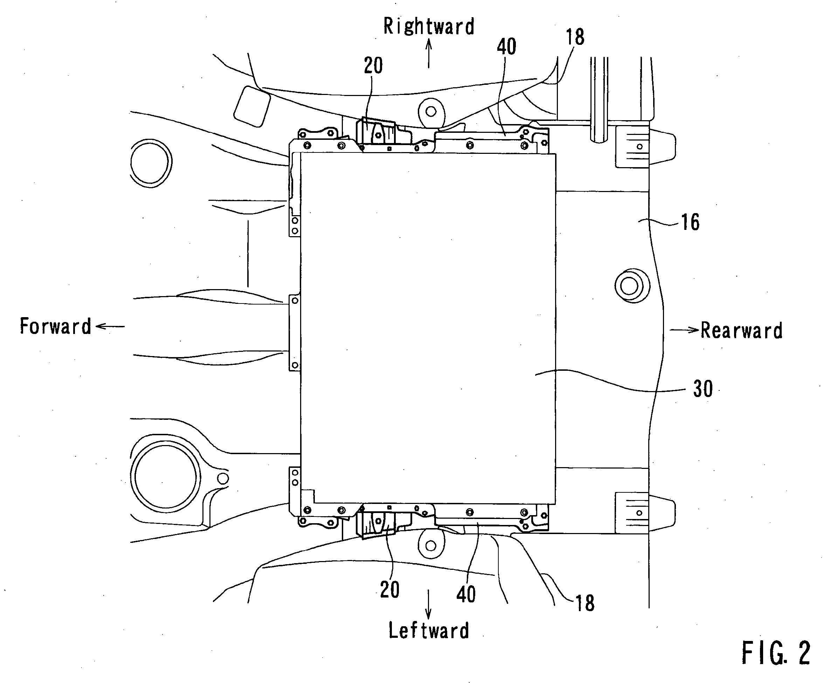

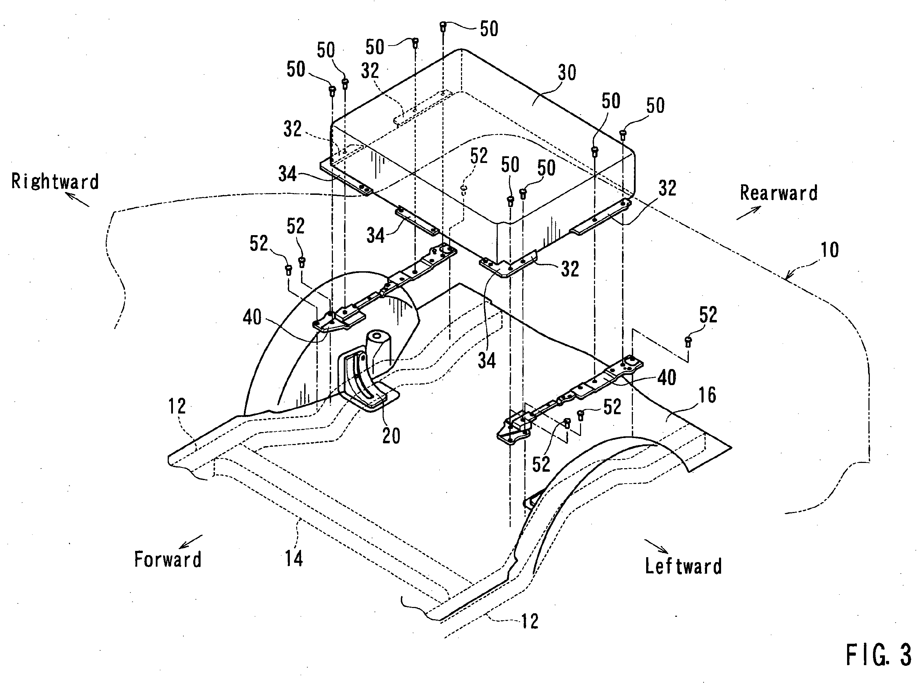

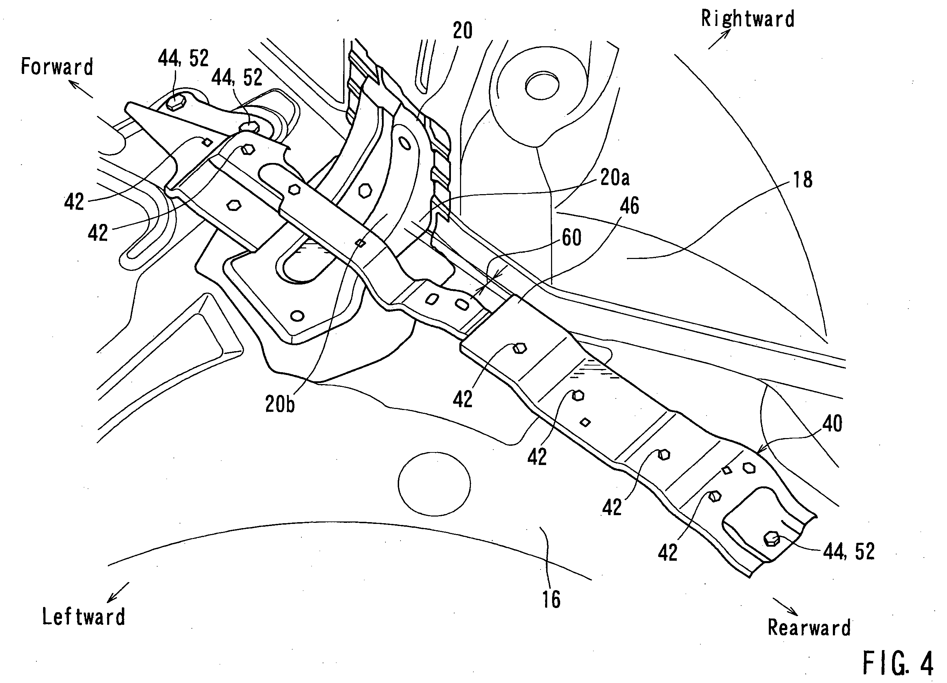

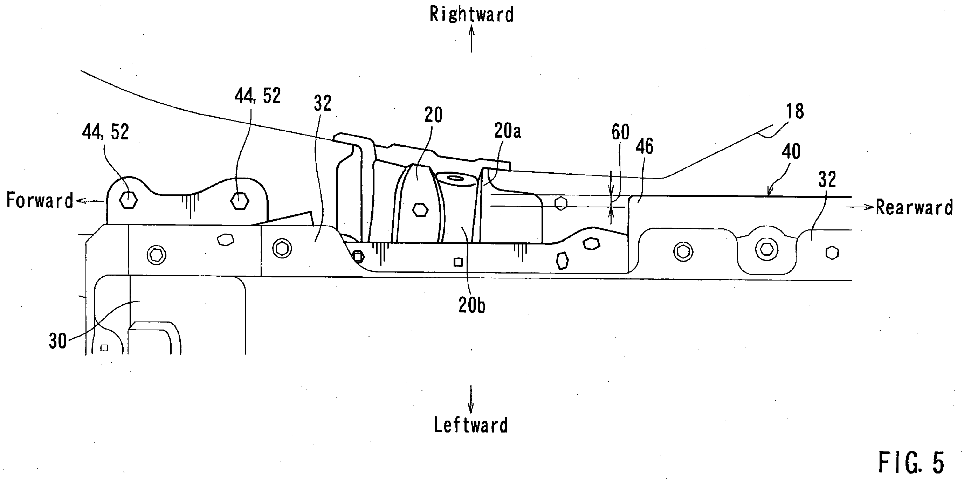

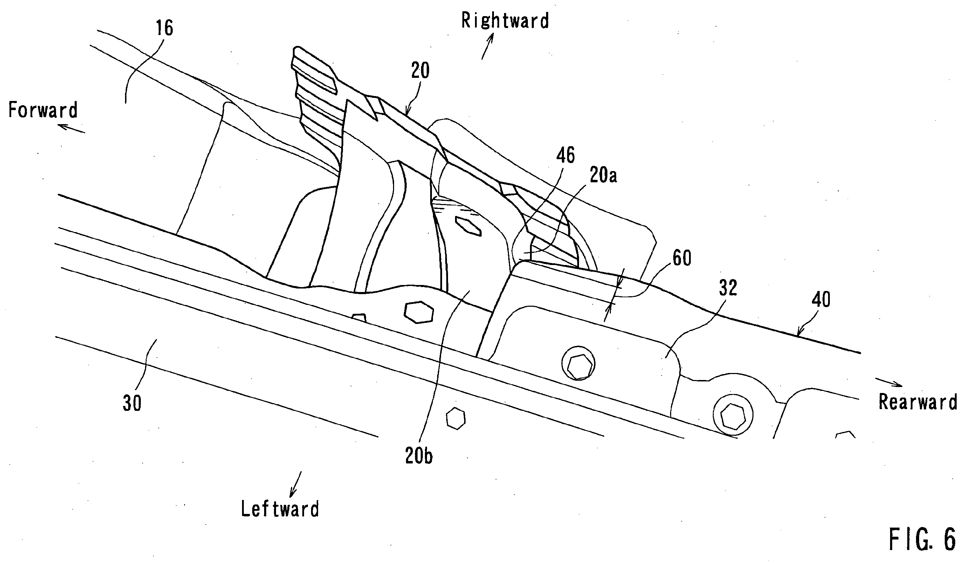

FIG 1 is a view which schematically illustrates a construction of a vehicle 10 on which a battery pack 30 is loaded. Therefore, structural components of the vehicle are schematically illustrated, and a detailed illustration thereof is omitted as appropriate (for example, front wheel houses are omitted). Further, in FIGS. 2 and 3, connecting structures between front leg portions 34 formed in a front side of the battery pack 30 and the vehicle is omitted. Also, in FIG. 4, the battery pack 30 is omitted in order to clearly show structures of attachment brackets 40 (support members). In FIGS. 5 and 6, detailed structures of the battery pack 30 and other components are omitted in order to clarify positions of the attachment brackets 40 (the support members) with respect to gussets 20 (reinforcing structural bodies). In addition, in the drawings, forward and rearward, and rightward and leftward of the vehicle 10 are respectively indicated by arrows.

In the vehicle-loading structure of the battery pack 30 according to the present embodiment, the battery pack 30 is loaded on the vehicle 10 by connecting the battery pack 30 to side frames 12 (vehicle body frames) that are longitudinally disposed along vehicle body side portions of the vehicle 10.

First, a structure of the vehicle 10 on which the battery pack 30 is loaded will be described. As shown in FIGS. 1 to 3, the vehicle 10 may include a pair of right and left side frames 12 (the vehicle body frames) as a portion of a framework thereof. The side frames 12 are positioned on a lower surface of the vehicle 10 so as to longitudinally extend along the vehicle body side portions of the vehicle 10. The left and right side frames 12 (the vehicle body frames) are connected to each other by cross members 14 (FIG 3) that extend in a vehicle width direction while they are spaced apart from each other in a longitudinal direction. A floor panel 16 constituting a floor surface of the vehicle 10 is disposed on upper surfaces of the side frames 12 (the vehicle body frames) and the cross members 14 (FIG 3). The floor panel 16 is positioned so as to straddle the left and right side frames 12. Further, the vehicle 10 may include front wheels (not shown) and rear wheels (not shown) that are respectively positioned in front and rear portions thereof. Therefore, connected to the floor panel 16 are wheel houses 18 that are respectively formed with curvature so as to cover upper portions of the front wheels and rear wheels. The battery pack 30 is disposed in a so-called luggage space behind a rear seat of the vehicle 10 while it is positioned between the wheel houses 18 for the rear wheels.

Next, the battery pack 30 will be described. As shown in FIGS. 1 to 3, the battery pack 30 is a device that includes a case and electrical accumulators (not shown) such as secondary batteries or capacitors received in the case. The battery pack 30 may also contain other internal components. Other internal components may include, for example, a computer (not shown) for controlling the electrical accumulators, a cooling fan for cooling the electrical accumulators, a cooling device (not shown) such as a cooling duct, and an electric device (not shown) for converting electric power. Although an iron case is exemplified as the case, various cases made of arbitrary materials can be used as the case. The battery pack 30 may have side leg portions 32 and front leg portions 34 that are formed in a lower surface thereof. The side leg portions 32 and front leg portions 34 are respectively projected outwardly from a front portion and both side portions of the battery pack 30. The leg portions arranged and formed in both side portions of the battery pack 30 may be referred to as the side leg portions 32. The battery pack 30 can be secured to and supported on the attachment brackets 40 (the support members) via the side leg portions 32. Further, the battery pack 30 can be fastened and connected to the side frames 12 (the vehicle body frames) positioned along a lower surface of the floor panel 16 via the attachment brackets 40 (the support members) using bolts 52. Although not shown and described in detail, the front leg portions 34 arranged and formed in the front portion of the battery pack 30 are fastened and secured to a mount (not shown) formed on the floor panel 16 using bolts (not shown).

Next, the attachment brackets 40 (the support members) will be described. As shown in FIGS. 3 and 4, the attachment brackets 40 (the support members) are used to load the battery pack 30 on the vehicle 10. The attachment brackets 40 (the support members) are secured to both side portions of the battery pack 30 and support the same, and are connected to the side frames 12 (the vehicle body frames). The attachment brackets 40 (the support members) are substantially the same except that they are formed symmetrically. Therefore, in the following, the attachment bracket 40 (the support member) arranged and formed in the right side of the vehicle 10 will be described as the representative.

As shown in FIGS. 3 and 4, the attachment bracket 40 (the support member) is formed by a metal strip-shaped member, so as to have the substantially same length as a longitudinal length of the battery pack 30. Further, the attachment bracket 40 is bent so as to conform to a concavo-convex shape of the floor panel 16 positioned on the side frames 12 (the vehicle body frames). Further, because the attachment bracket 40 (the support member) is arranged and constructed so as to be positioned adjacent to the corresponding wheel house 18, the attachment bracket 40 may have an outer shape that can not interfere with one of vehicle structural bodies positioned inside the wheel house 18. Further, the attachment bracket 40 (the support member) has hole portions 42 for the battery pack 30 and hole portions 44 for the side frame 12. The hole portions 42 can be used to secure the attachment bracket 40 to the battery pack 30 by bolts 50. Conversely, hole portions 44 can be used to secure the attachment bracket 40 to the side frame 12 (the vehicle body frame) by bolts 52. Two of the hole portions 44 for the side frame 12 formed in the attachment bracket 40 (the support member) are positioned in the vicinity of a front end portion of the attachment bracket 40 while one of them is positioned in a rear end portion of the attachment bracket 40. Further, a plurality of hole portions are formed as the hole portions 42 for the battery pack 30 formed in the attachment bracket 40, which hole portions are positioned along a longitudinal direction of the attachment bracket 40 and are positioned so as to correspond to attaching holes formed in the side leg portions 32 positioned on each of the side portions of the battery pack 30.

As described above, the attachment bracket 40 (the support member) is shaped to have the outer shape that can not interfere with the corresponding vehicle structural body positioned inside the corresponding wheel house 18. In addition, the attachment bracket 40 has an interference portion 46 that is configured to interfere with the corresponding vehicle structural body when the battery pack 30 moves in a vehicle forward direction caused by the disconnection of the attachment bracket 40 (the support member) from the corresponding side frame 12 (the vehicle body frame) due to a shock applied to the vehicle 10. In the present embodiment, the interference portion 46 of the attachment bracket 40 (the support member) can interfere with the corresponding gusset 20 (the reinforcing structural body), i.e., one of the vehicle structural bodies, so that the battery pack 30 can be supported by the gusset 20 (the reinforcing structural body).

The gussets 20 (the reinforcing structural bodies) will be described. The wheel houses 18 for the rear wheels of the vehicle respectively have damper support portions (not shown) that are capable of supporting dampers (not shown) of a suspension (not shown), so that large loads applied to the rear wheels can be applied to the damper support portions (not shown). Further, a suspension cross member (not shown) of a suspension device (not shown) is connected to the side frames 12 (the vehicle body frames) near the wheel houses 18. Therefore, the large loads can be applied to the side frames 12 (the vehicle body frames) and the wheel houses 18 via the suspension cross member (not shown). In view of this, the gussets 20 (the reinforcing structural bodies) are provided as reinforcing members for reinforcing the damper support portions (not shown), the wheel houses 18 or other such members. The gussets 20 (the reinforcing structural bodies) are disposed in comer portions between the wheel houses 18 and the floor panel 16. Each of the gussets 20 has a flange surface perpendicular to the corresponding wheel house 18 and the floor panel 16, thereby forming a bulged portion 20b that is projected toward an vehicle interior side.

As shown in FIGS. 4 and 5, the interference portion 46 of the attachment bracket 40 (the support member) is formed so as to be positioned opposite to the flange surface 20a of the corresponding gusset 20 (the reinforcing structural body) in a rear side position of the vehicle 10 when the attachment bracket 40 (the support member) is disposed in a position in which it can load the battery pack 30 on the vehicle 10. In particular, in the rear side position of the vehicle 10 with respect to the gusset 20 (the reinforcing structural body), the interference portion 46 has a strip-shaped portion that is extended rearward of the vehicle 10 while maintaining a width projected toward an exterior of the vehicle 10 (toward a right side wall of the vehicle 10) (that is extended while being projected toward the corresponding vehicle structural body). According to this construction, a positional relation between the interference portion 46 formed in the attachment bracket 40 (the support member) and the flange surface 20a of the corresponding gusset 20 (the reinforcing structural body) is configured to form an overlapping region 60 in which they can overlap each other in the width direction.

Next, an operation when the shock is applied to the vehicle 10 having the vehicle-loading structure of the battery pack 30 of Embodiment 1 will be described.

As shown in FIGS. 1 to 6, for example, when the shock is applied to the vehicle 10 from behind thereof, a load can be applied to the battery pack 30 so as to move the same in the vehicle forward direction. As a result, the load can be applied to the bolts 52 which may function as connecting points between the attachment brackets 40 (the support members) and the side frames 12 (the vehicle body frames). When fastening forces of the bolts 52 are greater than the shock load, the bolts 52 cannot be disconnected. However, when the shock load applied to the bolts 52 is greater than the fastening forces of the bolts 52, the bolts 52 can be successively removed, so that the attachment brackets 40 (the support members) can be separated from the side frames 12 (the vehicle body frames). As a result, the battery pack 30 can slide in the vehicle forward direction. However, each of the attachment brackets 40 (the support members) has the interference portion 46 formed therein. Further, each of the gussets 20 (the reinforcing structural bodies) is positioned in front of the interference portion 46. Due to the positional relation between the interference portion 46 and the flange surface 20a of each of the gussets 20 (the reinforcing structural bodies), the overlapping region 60 is formed. Therefore, the interference portion 46 can contact the flange surface 20a. As a result, the gussets 20 (the reinforcing structural bodies) can support the battery pack 30, so that the shock load applied to the battery pack 30 can be applied to the gussets 20 (the reinforcing structural bodies) via the interference portion 46 of each of the attachment brackets 40 (the support members). Thus, the battery pack 30 can be prevented from moving in the vehicle forward direction.

The shock can be applied to the vehicle 10 by, for example, a vehicle collision. The vehicle collision may include a whole surface front collision. In a case of the whole surface front collision, the shock can be applied to the entire surface of a front surface (or a rear surface) of the vehicle. To the contrary, there is a so-called offset collision in which the vehicle collides in one side that is somewhat displaced to the right or left. In a case of the offset collision, because the shock can be concentrated to the right or left side of the front surface (or the rear surface), damage of the vehicle tends to be more serious than the case of the whole surface front collision. Therefore, in the case of the offset collision, the shock load can be concentrically applied to the side frame 12 (the vehicle body frame) that is positioned in a side in which the collision has occurred. As a result, the side frame 12 can be highly deformed. As a result, in the side in which the collision has occurred, the corresponding attachment bracket 40 (the support member) is separated from the side frame 12 (the vehicle body frame) and slides in the vehicle forward direction. At this time, the attachment bracket 40 (the support member) connected to the side frame 12 (the vehicle body frame) that is positioned in a side in which the collision has not occurred can be pulled in the vehicle forward direction, so that the bolts 52 can be successively detached therefrom. In such a case, the collision load can be received by each of the gussets 20 (the reinforcing structural bodies) via the interference portion 46 of each of the attachment brackets 40 (the support members), so that the battery pack 30 can be prevented from moving in the vehicle forward direction.

In this way, in the vehicle-loading structure of the battery pack 30 according to Embodiment 1, each of the attachment brackets 40 (the support members) interleaved between the battery pack 30 and the side frames 12 (the vehicle body frames) has the interference portion 46. The interference portion 46 can interfere with the corresponding gusset 20 (the reinforcing structural body), one of the vehicle structural bodies, when the battery pack 30 moves in the vehicle forward direction caused by the disconnection of the attachment brackets 40 (the support members) from the side frames 12 (the vehicle body frames) due to the shock applied to the vehicle 10, so that the battery pack 30 can be supported by the gussets 20 (the reinforcing structural bodies).

That is, the shock load applied to the battery pack 30 due to the shock applied to the vehicle 10 can be received by the vehicle structural bodies via the connecting points between the attachment brackets 40 (the support members) and the side frames 12 (the vehicle body frames). In addition, such a shock load can be received by the vehicle structural bodies due to the interference of the interference portion 46 of each of the attachment brackets 40 (the support members) and each of the gussets 20 (the reinforcing structural bodies). This means that the number of ways in which the shock load is received by the vehicle structural bodies can be increased. Thus, the battery pack 30 can be restricted from moving in the vehicle forward direction without increasing the number of the connecting points of the battery pack 30 and the side frames 12 (the vehicle body frames) when the attachment brackets 40 (the support members) are disconnected from the side frames 12 (the vehicle body frames) due to the shock applied to the vehicle 10.

Further, connecting positions of the attachment brackets 40 (the support members) that are interleaved between the battery pack 30 and the side frames 12 (the vehicle body frames) can be selected in consideration of a shape of the battery pack 30 and shapes of the vehicle structural bodies.

Further, in a structure in which the battery pack 30 is directly connected to the side frames 12 (the vehicle body frames), design changes of the battery pack 30 and the vehicle structural bodies would involve large-scale changes in shape. However, in the above-described embodiment, the attachment brackets 40 (the support members) are disposed between the battery pack 30 and the side frames 12 (the vehicle body frames). Therefore, if the shape of the battery pack 30 or the shapes of the vehicle structural bodies are changed, it is possible to meet such changes by simply changing a shape of each of the attachment brackets 40 (the support members). That is, any changes of the battery pack 30 or the vehicle structural bodies in shape can be absorbed by the attachment brackets 40 (the support members). Thus, the large-scale changes in shape can be avoided.

Further, the interference portion 46 of each of the attachment brackets 40 (the support members) are formed so as to protrude and extend toward the corresponding gusset 20 (the reinforcing structural body). That is, the interference portion 46 can be formed by changing each of the attachment brackets 40 (the support members) in shape. Therefore, the interference portion 46 can be formed in each of the attachment brackets 40 (the support members) without adding any new components. As a result, material costs can be prevented from being increased. Further, since the interference portion 46 is formed by changing each of the attachment brackets 40 (the support members) in shape, an increase in weight can be minimized. Further, an interfering amount of the interference portion 46 and each of the gussets 20 (the reinforcing structural bodies) can be adjusted by adjusting a protruding and extending amount of the interference portion 46. For example, when the protruding amount of the interference portion 46 is increased in order to increase the interfering amount of the interference portion 46 and each of the gussets 20 (the reinforcing structural bodies), the shock load applied to each of the gussets 20 (the reinforcing structural bodies) from the interference portion 46 of each of the attachment brackets 40 (the support members) can be increased. Thus, a force that restricts the battery pack 30 from moving in the vehicle forward direction can be controlled.

Further, the gussets 20 (the reinforcing structural bodies) are existing reinforcing structural bodies that are capable of reinforcing the wheel houses 18. Thus, there is no need to newly add special purpose components.

Embodiment 1 of the present teaching is described above. However, the vehicle-loading structure of a battery pack in the present teaching is not limited to the present embodiment and can be carried out in various forms. For example, in the present embodiment, the components are secured using the bolts 50 and 52. The bolts can be fastened using nuts or threaded bores formed in the components.

Further, in the present embodiment, the gussets 20 (the reinforcing structural bodies) reinforcing the wheel houses 18 are exemplified as the vehicle structural bodies. However, the vehicle structural bodies in the present teaching are not limited to the gussets 20 (the reinforcing structural bodies). That is, the vehicle structural bodies may be various components provided that they can interfere with the attachment brackets 40 (the support members) to support the battery pack 30 when the battery pack 30 moves in the vehicle forward direction caused by the disconnection of the attachment brackets 40 (the support members) from the corresponding side frames 12 (the vehicle body frames) due to the shock applied to the vehicle 10. For example, any other structural components of the vehicle 10 can be used as appropriate. Preferably, rigid members rigidifying the vehicle 10 may be selected.

## Claims

1. A vehicle-loading structure of a battery pack (30) in which a battery pack is loaded on a vehicle (10) by connecting the battery pack (30) to a vehicle body frame (12) that is longitudinally disposed along a vehicle body side portion of the vehicle (10),
wherein the battery pack (30) is fastened and connected to the vehicle body frame (12) via a support member (40) that is capable of securing and supporting the battery pack (30), and
wherein the battery pack (30) is disposed between wheel houses (18) for rear wheels of the vehicle (10), whereby
the support member (40) has an interference portion (46) that is configured to interfere with a vehicle structural body (20) when the battery pack (30) moves in a vehicle forward direction caused by the disconnection of the support member (40) from the vehicle body frame (12) due to a shock applied to the vehicle (10),
the interference portion (46) of the support member (40) interferes with the vehicle structural body (20), so that the battery pack (30) can be supported by the vehicle structural body, and **characterized in that**
the vehicle structural body (20) is a reinforcing structural body (20) reinforcing the wheel houses (18), and
the interference portion (46) of the support member (40) is formed so as to protrude and extend toward the vehicle structural body (20) while protruding in a vehicle width direction, and is configured to be positioned under the battery pack (30).

2. The vehicle-loading structure of a battery pack as defined in claim 1, wherein the support member (40) comprises a pair of attachment brackets (40) that are separately secured to both portions of the battery pack (30)

## Patentansprüche

1. Fahrzeugbeladestruktur eines Batteriepacks (30), bei der ein Batteriepack auf ein Fahrzeug (10) durch ein Verbinden des Batteriepacks (30) mit einem Fahrzeugkörperrahmen (12), der entlang einem Fahrzeugkörperseitenabschnitt des Fahrzeugs (10) längs angeordnet ist, geladen ist,
wobei das Batteriepack (30) über ein Stützglied (40), das imstande ist, das Batteriepack (30) zu sichern und zu stützen, an dem Fahrzeugkörperrahmen (12) befestigt und mit diesem verbunden ist, und
wobei das Batteriepack (30) zwischen Radkästen (18) für Hinterräder des Fahrzeugs (10) angeordnet ist,
wobei das Stützglied (40) einen Zusammenwirkabschnitt (46) hat, der konfiguriert ist, um mit einem Fahrzeugstrukturkörper (20) zusammenzuwirken, wenn sich das Batteriepack (30) in eine Fahrzeugvorwärtsrichtung bewegt, was durch die Trennung des Stützungsglieds (40) von dem Fahrzeugkörperrahmen (12) aufgrund eines Stoßes, der auf das Fahrzeug (10) ausgeübt wird, verursacht wird,
der Zusammenwirkabschnitt (46) des Stützglieds (40) mit dem Fahrzeugstrukturkörper (20) zusammenwirkt, so dass das Batteriepack (30) durch den Fahrzeugstrukturkörper gestützt werden kann, und
**dadurch gekennzeichnet, dass**
der Fahrzeugstrukturkörper (20) ein verstärkender Strukturkörper (20) ist, der die Radkästen (18) verstärkt, und
der Zusammenwirkabschnitt (46) des Stützglieds (40) gebildet ist, um in Richtung des Fahrzeugstrukturkörpers (20) hervorzuragen und sich in diese Richtung zu erstrecken, während er in eine Fahrzeugbreitenrichtung hervorragt, und konfiguriert ist, um unter dem Batteriepack (30) positioniert zu sein.

2. Fahrzeugbeladestruktur eines Batteriepacks, wie sie in Anspruch 1 definiert ist, wobei das Stützglied (40) ein Paar aus Anbringungsklammern (40), die an beiden Abschnitten des Batteriepacks (30) separat gesichert sind, aufweist.

## Revendications

1. Structure de chargement sur un véhicule d'un bloc-batterie (30), dans laquelle un bloc-batterie est chargé sur un véhicule (10) en reliant le bloc-batterie (30) à un châssis de véhicule (12) qui est disposé longitudinalement le long d'une partie latérale du châssis de véhicule du véhicule (10),
dans laquelle le bloc-batterie (30) est fixé et relié au châssis de véhicule (12) par un élément de support (40) qui est capable de fixer et de supporter le bloc-batterie (30), et
dans laquelle le bloc-batterie (30) est disposé entre des passages de roues (18) destinés aux roues arrières du véhicule (10),
dans lequel l'élément de support (40) possède une partie d'interférence (46) qui est configurée pour interférer avec un corps structurel de véhicule (20) lorsque le bloc-batterie (30) se déplace dans la direction avant du véhicule en raison de la déconnexion de l'élément de support (40) du châssis du véhicule (12) suite à un choc imposé sur le véhicule (10),
la partie d'interférence (46) de l'élément de support (40) interfère avec le corps structurel de véhicule (20), de sorte que le bloc-batterie (30) puisse être supporté par le corps structurel de véhicule, et **caractérisé en ce que**
le corps structurel de véhicule (20) est un corps structurel de renfort (20) qui renforce les passages de roues (18), et
la partie d'interférence (46) de l'élément de support (40) est formée de façon à sortir et à s'étendre vers le corps structurel de véhicule (20) tout en sortant dans le sens de la largeur du véhicule, et est configurée pour être positionnée sous le bloc-batterie (30).

2. Structure de chargement sur un véhicule d'un bloc-batterie selon la revendication 1, dans laquelle l'élément de support (40) comprend une paire de pattes de fixation (40) qui sont fixées séparément sur les deux parties du bloc-batterie (30).
